**Europäisches Patentamt**

**European Patent Office**

**Office européen des brevets**

(19)

(11) Veröffentlichungsnummer: **0 113 887**
**B1**

# (12) EUROPÄISCHE PATENTSCHRIFT

(45) Veröffentlichungstag der Patentschrift:
09.03.88

(21) Anmeldenummer: 83112614.9

(22) Anmeldetag: 15.12.83

(51) Int. Cl.⁴: H 02 B 11/04

(54) Schaltschrank zur Aufnahme eines herausziehbaren Gerätes.

(30) Priorität: 22.12.82 SE 8207334

(43) Veröffentlichungstag der Anmeldung:
25.07.84 Patentblatt 84/30

(45) Bekanntmachung des Hinweises auf die Patenterteilung:
09.03.88 Patentblatt 88/10

(84) Benannte Vertragsstaaten:
DE FR GB

(56) Entgegenhaltungen:
DE - A - 2 315 569
DE - A - 2 937 702
DE - A - 3 014 558
GB - A - 294 689

(73) Patentinhaber: ASEA AB, S-721 83 Västeras (SE)

(72) Erfinder: Johansson, Jan, Risövägen 4,
S-777 00 Smedjebacken (SE)
Erfinder: Karlsson, Jan, Bjurtjärnsvägen 16,
S-771 00 Ludvika (SE)

(74) Vertreter: Boecker, Joachim, Dr.-Ing.,
Rathenauplatz 2-8, D-6000 Frankfurt a.M. 1 (DE)

## Beschreibung

Die Erfindung betrifft einen Schaltschrank zur Aufnahme eines herausziehbaren Gerätes gemäss dem Oberbegriff des Anspruches 1. Bei dem herausziehbaren Gerät kann es sich beispielsweise um einen Schalter handeln. Der Schaltschrank gemäss der Erfindung ist in erster Linie für Innenraumschaltanlagen im Mittelspannungsbereich von drei bis 36 kV bestimmt.

Für Schaltschränke der vorgenannten Art wird häufig verlangt, dass sie mit Abschirmvorrichtungen versehen sind, welche selbsttätig die spannungsführenden Teile abschirmen, sobald der Schalter aus dem Schrank herausgezogen wird. Derartige Abschirmvorrichtungen werden dabei zwischen den Sammelschienen der Schaltanlage und dem Schalter beziehungsweise zwischen dem Schalter und den Kabelanschlüssen des Schrankes angeordnet. Bei Steckkontakten mit kreisförmigem Querschnitt ist es bekannt, solche Abschirmvorrichtungen mit zwei auf je einer Welle drehbar gelagerten Klappen zu versehen, die mit individuellen Federn und Verriegelungsanordnungen versehen sind (DE-A 2 937 702). Diese Ausführung enthält eine grosse Anzahl verschiedener Teile und ist daher verhältnismässig aufwendig. Ausserdem ist diese Ausführung für Steckkontakte mit rechteckigem Querschnitt wenig geeignet.

Es sind ferner Abschirmvorrichtungen zu dem vorgenannten Zweck bekannt, die in Form einer Gummimanschette aufgebaut sind, die in einem in einer Schirmwand eingesetzten, rohrförmigen, steifen Isoliermaterialhalter montiert ist (DE-A 3 014 558). Eine solche Manschette verursacht jedoch eine grosse Reibung an den Kontaktschienen des Schalters beim Hineinschieben und Herausziehen des Schalters, so dass eine verhältnismässig grosse Betätigungskraft erforderlich ist. Durch Schmierung der Kontaktschienen kann die Reibung zwar verringert werden, doch besteht dabei die Gefahr, dass das auf die Gummimanschette wirkende Schmiermittel deren Alterung beschleunigt. Selbst wenn die Manschette aus besonders haltbarem Material hergestellt wird, ist die Lebensdauer einer solchen Dichtungsanordnung wahrscheinlich erheblich geringer als die der Schaltanlage. Man muss daher damit rechnen, dass die Dichtungsanordnung nach einer gewissen Betriebszeit ausgetauscht werden muss, wodurch eine Betriebsunterbrechung der Schaltanlage erforderlich wird.

Der Erfindung liegt die Aufgabe zugrunde, einen Schaltschrank der eingangs genannten Art mit einer Dichtungsvorrichtung für die Kontaktschienen der herausziehbaren Geräte zu entwickeln, welche die genannten Kontaktschienen dicht umschliesst und verschiedene, getrennt zu haltende Räume gegen Rauchgase abdichtet. Ferner soll die Dichtungsvorrichtung des Schaltschrankes im Vergleich zu den bekannten einfacher und betriebssicherer sein.

Zur Lösung dieser Aufgabe wird ein Schaltschrank nach dem Oberbegriff des Anspruches 1 vorgeschlagen, welcher erfindungsgemäss die im kennzeichnenden Teil des Anspruches 1 genannten Merkmale hat.

Vorteilhafte Weiterbildungen der Erfindung sind in den Unteransprüchen genannt.

Anhand des in den Figuren gezeigten Ausführungsbeispieles soll die Erfindung näher erläutert werden. Es zeigen:

Fig. 1 eine Vorderansicht eines Schaltschrankes gemäss der Erfindung für eine Mittelspannungsschaltanlage,

Fig. 2 einen Vertikalschnitt durch den Schaltschrank längs der Linie II–II in Fig. 1,

Fig. 3 die Vorderansicht einer von mehreren in dem Schaltschrank angeordneten automatisch schliessenden Durchführungen für die Kontaktschienen eines im Schrank angeordneten Schalters,

Fig. 4 einen Schnitt durch die Durchführung längs der Linie IV–IV in Fig. 3.

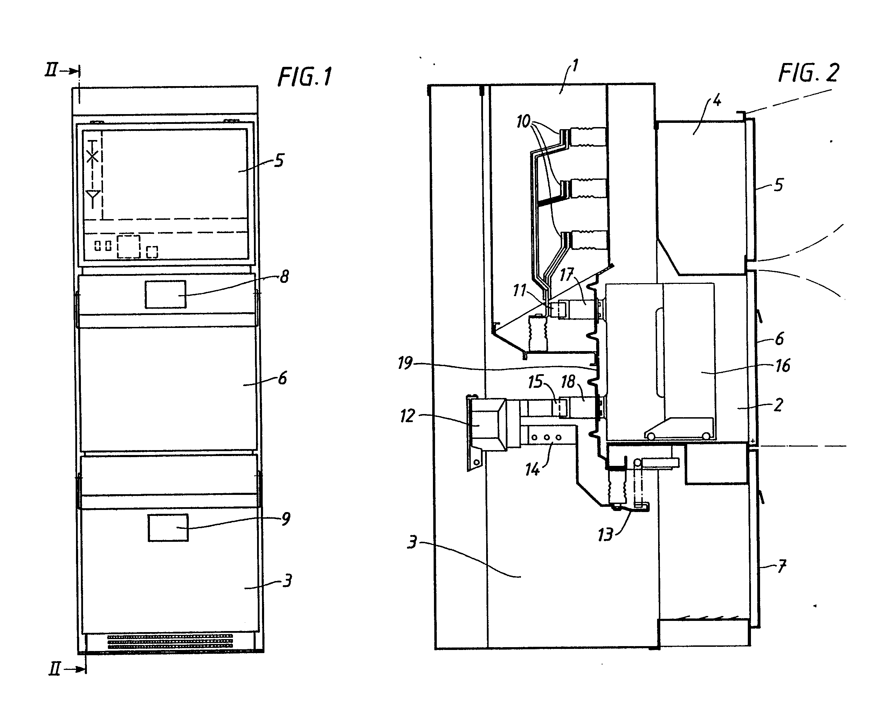

Der in den Figuren 1 und 2 gezeigte Schaltschrank dient zum Einsatz in eine Mittelspannungsschaltanlage für eine Nennspannung von 12 kV. Der Schrank ist durch Zwischenwände in einen Sammelschienenraum 1, einen Schalterraum 2, einen Kabelraum 3 und einen Raum 4 für Mess- und Anzeigegeräte aufgeteilt. Die Vorderseite des Schrankes ist in eine obere Inspektionsluke 5, eine herunterklappbare mittlere Luke 6 vor dem Schalterraum 2 und eine untere Luke 7 vor dem Kabelraum 3 aufgeteilt. In den Luken 6 und 7 sind Inspektionsfenster 8 bzw. 9 angeordnet.

Der Sammelschienenraum 1 enthält drei Sammelschienen 10, die sich durch die zu der Schaltanlage gehörenden, nebeneinander aufgestellten Schränke erstrecken. Jede Sammelschiene 10 ist an einem ihr zugeordneten, in dem Raum 1 fest montierten Aufnahmekontakt 11 angeschlossen.

Der Kabelraum 3 enthält einen Stromwandler 12 für jede Phase sowie einen Erdungsschalter 13. Der Stromwandler 12 trägt an seiner einen Anschlussklemme eine Anschlussschiene 14 für externe Kabel und an seiner anderen Anschlussklemme einen ortsfesten Aufnahmekontakt 15.

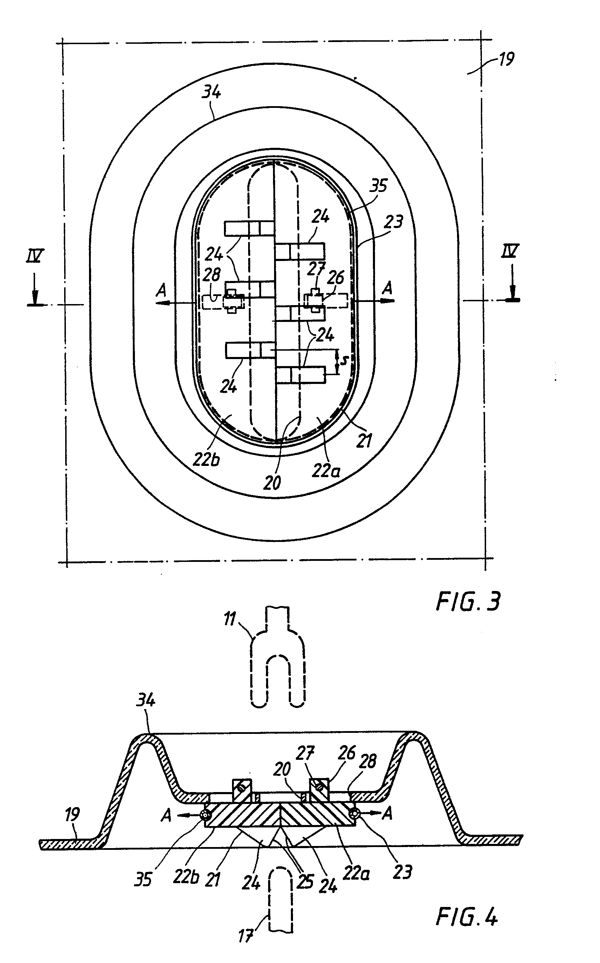

Der Schalterraum 2 enthält einen herausziehbaren Leistungsschalter 16, der in Fig. 2 in seiner Betriebsstellung gezeigt ist, wobei die Steckkontakte 17, 18 des Schalters in die festen Aufnahmekontakte 11, 15 hineingeschoben sind. Die Steckkontakte sind in dem gezeigten Ausführungsbeispiel Kontaktschienen mit rechteckigem Querschnitt, z.B. mit den Massen 10 × 75 mm. Zwischen dem Schalterraum 2 und den Sammelschienen- und Kabelräumen 1, 3 ist eine isolierende Schirmwand 19 angeordnet, die mit Durchführungslöchern 20 (Fig. 3 und 4) für die Steckkontakte 17, 18 versehen ist. Im Anschluss an jedes dieser Durchführungslöcher ist eine Dichtungsvorrichtung 21 angebracht, die in der Betriebsstellung des Schalters die durch das Loch hindurchgehende Kontaktschiene umschliesst und die, wenn der Schalter in Ausschaltstellung herausgezogen wird, das Durchführungsloch automatisch schliesst.

Die Konstruktion der Dichtungsvorrichtung 21 geht aus den Figuren 3 und 4 hervor. Zu ihr gehört eine aus hartem Isoliermaterial (z.B. Epoxy-Kunststoff) hergestellte Dichtungsscheibe, die aus zwei zusammengehaltenen und seitlich beweglichen Hälften 22a, 22b besteht. Die Scheibenhälften werden von einer die Scheibe umschliessenden, ringförmigen Feder 23 gegeneinandergedrückt, welche in einer um den Umfang der Scheibe herumlaufenden Nut 35 liegt. Die Feder 23 kann aus einem O-Ring aus elastischem Material (z.B. Gummi) oder aus einer endlosen Schraubenfeder aus unmagnetischem metallischem Material bestehen. Die Feder kann evtl. auch aus magnetischem Material bestehen, wobei jedoch ein Zwischenstück aus isolierendem oder unmagnetischem Material besteht.

Jede Scheibenhälfte hat auf ihrer nach vorne gerichteten Seite Ansätze 24, die dazu dienen, die zugehörigen Kontaktschienen in die Teilungsebene der Scheibe zu führen, damit die Scheibenhälften in Richtung der Pfeile A auseinandergeschoben werden. Aus diesem Grunde haben die Ansätze 24 zur Teilungsebene hin schräge Gleitflächen 25, an denen die Frontfläche der Kontaktschiene anschlägt. Diese schrägen Gleitflächen sind zumindest an den Übergangsstellen zu den Seitenflächen der Kontaktschiene abgerundet. In Fig. 4 ist die Lage der festen und beweglichen Kontakte 11 und 17 gestrichelt dargestellt.

Aus Figur 3 geht hervor, dass die Führungsansätze 24 an der einen Scheibenhälfte 22a im Verhältnis zu den Führungsansätzen 24 an der anderen Scheibenhälfte 22b seitlich versetzt sind. Die seitliche Versetzung s zwischen einander gegenüberliegenden Ansätzen kann beispielsweise zwischen 5 und 15 mm betragen. Durch diese Seitenversetzung erzielt man einen besseren Berührungsschutz für die Anordnung, die in dieser Hinsicht die Normen für den Schutzgrad IPH 3 gemäss der IEC Publication 298 erfüllt.

Jede Scheibenhälfte ist mit einem nach hinten gerichteten Befestigungszapfen 26 versehen, der mit Hilfe eines isolierenden Stiftes 27 in einem Langloch 28 in der Schirmwand 19 derart verschiebbar befestigt ist, dass die Scheibenhälften in seitlicher Richtung die erforderliche Bewegungsfreiheit haben. Der Zapfen 26 kann zylindrisch ausgebildet und mit Gewinde versehen sein, wobei der Stift 27 durch eine Mutter ersetzt wird.

Um jedes Durchführungsloch herum ist die Schirmwand 19 mit einer wellenförmigen Falte 34 zur Verlängerung der Kriechstrecken zwischen benachbarten Phasen beziehungsweise zwischen den Phasen und Erde versehen. Falls erforderlich, beispielsweise bei Schaltanlagen für eine höhere Nennspannung, kann die Schirmwand mit mehreren konzentrisch angeordneten Falten der genannten Art ausgeführt werden.

Die Schirmwand 19 wird vorzugsweise aus durchsichtigem Material hergestellt, z.B. Polykarbonat. Dadurch können die hinter dem Schirm liegenden Kontaktstellen leicht überwacht werden und eventuell schadhafte Teile rechtzeitig ersetzt werden. Mit der gezeigten Konstruktion wird im übrigen erreicht, dass der Abbrand bei Lichtbogenfehlern im wesentlichen an den beweglichen Kontaktteilen (d.h. an den Kontaktschienen des Schalters) erfolgt, was daran liegt, dass ein zwischen zwei Phasen brennender Kurzschlusslichtbogen durch die elektrodynamischen Kräfte, die das Bestreben haben, die Stromschleife zu vergrössern, in der Leistungszufuhrrichtung nach vorn getrieben wird, wobei sich die Fusspunkte des Lichtbogens auf die Kontaktschienen 17 oder 18 hinter dem Schirm 19 stellen. Dass der Abbrand an den beweglichen Kontaktteilen auftritt, ist vorteilhaft, da der Austausch der beweglichen Teile bedeutend einfacher ist als der der festen Teile.

## Patentansprüche

1. Schaltschrank zur Aufnahme eines herausziehbaren Gerätes (16), welches Steckkontakte (17, 18) hat, die in der Betriebsstellung des Gerätes in im Schrank vorhandene feste Kontakte (11, 15) greifen, mit einer zwischen dem Gerät und den festen Kontakten fest im Schrank montierte Schirmwand (19) aus Isoliermaterial, die mit Durchführungslöchern (20) für die Steckkontakte versehen ist, und mit je einer an jedem Durchführungsloch angeordneten Dichtungsvorrichtung (21), die in der Betriebsstellung des Gerätes den durch das Loch hindurchgehenden Steckkontakt (17, 18) umschliesst und die eine aus hartem Isoliermaterial hergestellte und aus zwei Hälften (22a, 22b) aufgebaute Dichtungsscheibe sowie eine Federvorrichtung (23) zum Gegeneinanderpressen der beiden Scheibenhälften umfasst, wobei die Scheibenhälften (22a, 22b) beim Einschieben der Steckkontakte (17, 18) in ihre Betriebsstellung von diesen seitlich auseinandergeschoben werden, dadurch gekennzeichnet, dass die Federvorrichtung (23) aus einer in einer rundumlaufenden Nut (35) am Umfang der Scheibe angeordneten Feder besteht.

2. Schaltschrank nach Anspruch 1, dadurch gekennzeichnet, dass die Feder (23) eine endlose Schraubenfeder aus unmagnetischem Material ist.

3. Schaltschrank nach Anspruch 1, dadurch gekennzeichnet, dass die Feder (23) ein O-Ring aus elastischem Material ist.

4. Schaltschrank nach einem der vorhergehenden Ansprüche, dadurch gekennzeichnet, dass die Dichtungsscheibe (22a, 22b) an ihrer zur Vorderseite des Schrankes gerichteten Seite mit Ansätzen (24) versehen ist, die zur Teilungsebene der Scheibe hin abgeschrägte Gleitflächen (25) haben, gegen welche die Vorderfläche des Steckkontaktes (17, 18) beim Einschieben in seine Betriebsstellung anschlägt.

5. Schaltschrank nach Anspruch 4, dadurch gekennzeichnet, dass die Ansätze (24) an der einen Scheibenhälfte (22a) im Verhältnis zu den Ansätzen an der anderen Scheibenhälfte (22b) seitlich versetzt sind.

6. Schaltschrank nach einem der vorhergehenden Ansprüche, dadurch gekennzeichnet, dass die Schirmwand (19) durchsichtig ist.

7. Schaltschrank nach einem der vorhergehenden Ansprüche, dadurch gekennzeichnet, dass die Schirmwand (19) um jedes Durchführungsloch (20) herum mit mindestens einer wellenförmigen Falte (34) zur Verlängerung der Kriechstrecke versehen ist.

## Claims

1. Switching cabinet for the receipt of a pull-out device (16), the device (16) being provided with plug contacts (17, 18) which in the operating position of the device are engaged in stationary contacts (11, 15) arranged in the cabinet, with a screening wall (19) of insulating material fixedly arranged in the cabinet between said device and said stationary contacts and provided with passage holes (20) for the plug contacts, with a sealing device (21) arranged at each passage hole which sealing device surrounds the plug contact (17, 18) extending through the hole in the operating position of the device (16), the sealing device (21) being made of a hard insulating material and comprising a sealing disc built up of two halves (22a, 22b) as well as a spring device (23) for pressing together the two disc halves, and with the two disc halves (22a, 22b) being laterally spaces apart when the plug contacts (17, 18) are pushed into their operating position, characterized in that said spring device (23) consists of a spring element (23) arranged in a slot extending along the circumference of the disc.

2. Switching cabinet according to Claim 1, characterized in that the spring element (23) is an endless screw spring of non-magnetic material.

3. Switching cabinet according to Claim 1, characterized in that the spring element (23) consists of an O-ring of elastic material.

4. Switching cabinet according to any of the preceding Claims, characterized in that the sealing disc (22a, 22b) is provided with projections (24) on its side facing the front side of the cabinet said projections (24) being formed with sliding surfaces (25) inclined towards the plane of osculation of the disc, the front surface of the plug contact (17, 18), when being pushed into its operating position, abutting against said sliding surfaces.

5. Switching cabinet according to Claim 4, characterized in that the projections (24) of one of the disc halves (22a) are laterally staggered in relation to the projections of the other disc half (22b).

6. Switching cabinet according to any of the preceding Claims, characterized in that the screening wall (19) is transparent.

7. Switching cabinet according to any of the preceding Claims, characterized in that the screening wall (19) is provided with at least one wave-shaped fold (34) around each passage hole (20) to increase the length of the creepage path.

## Revendications

1. Armoire de commutation destinée à recevoir un appareil débrochable (16) pourvu de broches de contact (17, 18) qui pénètrent, dans la position de fonctionnement de l'appareil, dans des contacts fixes (11, 15) prévus dans l'armoire, avec une paroi de blindage (19) en un matériau isolant montée de façon fixe dans l'armoire, entre l'appareil et les contacts fixes et présentant des trous de passage (20) pour les broches de contact et avec un dispositif d'étanchéité (21) associé à chaque trou de passage et qui, dans la position de service de l'appareil, entoure la broche de contact (17, 18) qui traverse le trou, ledit dispositif d'étanchéité comportant un disque d'étanchéité fait avec un matériau isolant dur et étant constitué par deux moitiés (22a, 22b), ainsi qu'un dispositif élastique (23) pour presser l'une contre l'autre les deux moitiés de disque (22a, 22b) qui, lors de l'insertion des broches de contact (17, 18) sont écartées latéralement par ces dernières pour assumer leur position de fonctionnement, caractérisée par le fait que le dispositif élastique (23) est constitué par un ressort disposé dans une gorge (35) s'étendant de façon arrondie à la périphérie du disque.

2. Armoire de commutation selon la revendication 1, caractérisée par le fait que le ressort est un ressort hélicoïdal sans fin fait avec un matériau non magnétique.

3. Armoire de commutation selon la revendication 1, caractérisée par le fait que le ressort (23) est un anneau torique fait avec un matériau élastique.

4. Armoire de commutation selon l'une des revendications précédentes, caractérisée par le fait que le disque d'étanchéité (2?, 22b) est pourvu, sur son côté qui est dirigé ve.. .e côté frontal de l'armoire, d'appendices (24) qui possèdent des surfaces de glissement (25) biseautées en direction du plan de division du disque et contre lesquelles vient porter la surface antérieure de la broche de contact (17, 18), lors de l'insertion dans sa position de fonctionnement.

5. Armoire de commutation selon la revendication 4, caractérisée par le fait que les appendices (24) qui sont prévus sur l'une (22a) des moitiés du disque sont décalés latéralement par rapport aux appendices qui sont prévus sur l'autre moitié (22b) du disque.

6. Armoire de commutation selon l'une des revendications précédentes, caractérisée par le fait que la paroi de blindage (19) est transparente.

7. Armoire de commutation selon l'une des revendications précédentes, caractérisée par le fait que la paroi de blindage (19) est pourvue, autour de chaque trou de passage (20), d'au moins un pli de forme ondulée (34) en vue de prolonger la voie de fuites.

FIG.1

FIG. 2

FIG.3

FIG.4